# EUROPÄISCHE PATENTSCHRIFT

(11) **EP 2 617 637 B1**
(45) Veröffentlichungstag und Bekanntmachung des Hinweises auf die Patenterteilung: **05.06.2019**
(21) Anmeldenummer: 12194480.5
(22) Anmeldetag: 27.11.2012
(51) Int. Cl.: B62M 6/50, B62K 21/12

(54) **Elektrofahrrad mit einer Vorrichtung zum Signalisieren von Informationen an den Fahrer des Fahrrads**
Electric assisted bicycle comprising a device for signaling information to the rider of the bicycle
Vélo à assistance élèctrique avec une dispositif de signalisation d'informations à un conducteur dudit vélo

(30) Priorität: 17.01.2012 DE 102012200597
(43) Veröffentlichungstag der Anmeldung: 24.07.2013
(73) Patentinhaber: ROBERT BOSCH GMBH, 70442 Stuttgart (DE)
(72) Erfinder: Dasbach, Gregor, 14120 Mondeville (FR); Schifferdecker, Daniel, 72072 Tuebingen (DE); Baumgaertner, Daniel, 71665 Vaihingen (DE)

(56) Entgegenhaltungen:
- DE-A1-102006 033 206
- JP-A- 2007 112 316
- US-A- 5 763 980
- US-A1- 2010 179 587

## Beschreibung

### Stand der Technik

Die Erfindung betrifft ganz allgemein ein Elektrofahrrad mit einer Vorrichtung zum Signalisieren von Informationen an den Fahrer des Elektrofahrrads.

Viele Fahrräder und insbesondere Elektrofahrräder sind heute mit einem Fahrradcomputer und einer Sensorik ausgestattet, um Funktionsparameter des Fahrrads zu erfassen, wie z.B. Geschwindigkeit, Beschleunigung und Informationen über die zurückgelegte Wegstrecke, aber auch um die Funktionsfähigkeit einzelner Komponenten zu überwachen, wie z.B. des Antriebs, der Beleuchtungsmittel und der Bremsen. Die Ausgabe von Informationen erfolgt in der Regel optisch über ein Display und/oder akustisch durch Signaltöne oder auch eine Sprachausgabe.

Es hat sich gezeigt, dass Fahrradfahrer in der Regel so stark von der körperlichen Betätigung während der Fahrt, der technischen Handhabung des Fahrrads und der sich ständig ändernden Strecken- und Verkehrssituation beansprucht sind, dass weder die optische Anzeige von Informationen am Display des Fahrradcomputers noch deren akustische Wiedergabe oder Signaltöne zuverlässig wahrgenommen werden. Dies erweist sich insbesondere dann als kritisch, wenn Gefahrensituationen oder die Beschädigung sicherheitsrelevanter Fahrradkomponenten signalisiert werden sollen. Wünschenswert ist eine Signalisierung, die den Radfahrer nicht vom Verkehrsgeschehen ablenkt und trotzdem sicher wahrgenommen wird.

Aus der gattungsgemäßen Schrift DE 10 2006 033 206 A1 ist ein Verfahren bekannt, mit dessen Hilfe einem Fahrer eines motorisierten lenkergesteuerten Fahrzeugs durch Vibration im Lenker eine passiv wahrnehmbare Information über den (noch) eingeschalteten Blinker gegeben werden kann.

Aus der Schrift JP 2007 112316 A ist ein System zur Warnung des Fahrers eines Motorfahrrads bekannt, bei dem in den Griffen des Lenkers Vibrationsmittel untergebracht sind. Diese Vibrationsmittel ermöglichen einem Navigationsmittel oder einem Spurhalteassistenten die Weitergabe von Informationen an den Fahrer mittels Vibrationen im Lenker.

### Offenbarung der Erfindung

Mit der vorliegenden Erfindung wird ein Elektrofahrrad mit einer Vorrichtung vorgeschlagen, mit der dem Benutzer des Fahrrads äußerst zuverlässig Informationen signalisiert werden können.

Erfindungsgemäß umfasst das Elektrofahrrad mit dieser Vorrichtung Mittel zum Erfassen von Zustandsinformationen und eine Steuereinheit mit mindestens einer Schnittstelle für die Zustandsinformationen, mit Mitteln zum Auswerten der Zustandsinformationen und mit Mitteln zum Auslösen eines Vibrationsalarms. Des Weiteren umfasst die erfindungsgemäße Vorrichtung Vibrationsmittel, die von der Steuereinheit ansteuerbar sind und durch die sich mindestens eine Fahrradkomponente gezielt in Vibration versetzen lässt.

Der Erfindung liegt die Idee zugrunde, den Benutzer eines Elektrofahrrads haptisch, und zwar mittels Vibrationsalarm, über bestimmte Ereignisse zu informieren. Dabei wird ausgenutzt, dass der Fahrer zwangsläufig in physischem Kontakt mit seinem Fahrrad steht und für jedwede Fahrradbewegung besonders sensibel ist. Ein erfindungsgemäßes Elektrofahrrad lässt sich besonders einfach mit einer Vorrichtung ausrüsten, da in diesem Fall bereits eine Batterie als Energieversorgung zur Verfügung steht und wobei der Elektromotor als Vibrationsmittel genutzt wird. Die Vorrichtung kann dann einfach durch Erweiterung der Funktionalität des herkömmlichen Fahrradcomputers realisiert werden. Diese Erweiterung der Funktionalität bezieht sich auf die Auswertung der erfassten Zustandsinformationen und umfasst das Ansteuern der Vibrationsmittel.

Die Signalisierungsmöglichkeiten der Vorrichtung hängen wesentlich vom Umfang und der Art der erfassten Zustandsinformationen ab.

Sollen dem Fahrer Informationen signalisiert werden, die auf der Basis der aktuellen Bewegungsparameter gewonnen werden, wie z.B. eine überhöhte Geschwindigkeit oder ein persönlicher Geschwindigkeitsrekord, so muss die Vorrichtung über entsprechende Sensoren zum Erfassen dieser Zustandsinformationen verfügen. Des Weiteren kann die Vorrichtung mit einer Schnittstelle für eine externe Informationsquelle, z. B. ein Mobiltelefon, ausgestattet sein, so dass der Fahrer via Vibrationsalarm z.B. über eingehende Anrufe und Nachrichten informiert werden kann.

In einer besonders vorteilhaften Ausführungsform umfasst die Vorrichtung Sensoren zum Überwachen des Betriebszustands einzelner Fahrradkomponenten, wie z.B. der Beleuchtung, der Bremsen, der Kette und des Reifendrucks. Im Falle eines Elektrofahrrads können auch Sensoren zum Überwachen des Motorbetriebs und des Ladezustands der Batterie vorgesehen sein. Durch Auswertung dieser Zustandsinformationen können dem Fahrer frühzeitig Beschädigungen bzw. Funktionseinschränkungen einzelner Fahrradkomponenten signalisiert werden. Da der Fahrer das Vibrationssignal unmittelbar wahrnimmt, kann er unverzüglich reagieren und so bei sicherheitsrelevanten Mängeln Gefahrensituationen vermeiden. Das frühzeitige Signalisieren von Mängeln erweist sich aber auch im Hinblick auf eine bedarfsorientierte Fahrradwartung als vorteilhaft. Ein Betrieb nach Überschreitung der Wartungsintervalle führt zu einer Verschlechterung des Systemzustandes, was durch frühzeitige Wartung verhindert werden kann. Jedenfalls wirken sich bedarfsorientierte Wartungsmaßnahmen immer positiv auf die Lebensdauer des Gesamtsystems aus und tragen wesentlich zur Verkehrssicherheit des Fahrzeugs bei.

Wie bereits erwähnt, umfasst die Vorrichtung Vibrationsmittel, durch die sich mindestens eine Fahrzeugkomponente gezielt in Vibration versetzen lässt. Diese Vibrationsmittel können beispielsweise am Lenker angreifen, so dass zumindest ein Griffbereich des Fahrradlenkers in Vibration versetzt wird. Eine weitere Möglichkeit besteht darin, ein oder auch beide Pedale in Vibration zu versetzen. Diese Variante eignet sich insbesondere für Elektrofahrräder, deren Motor im Bereich des Tretlagers angeordnet ist, da der Motor als Vibrationsmittel eingesetzt wird. Wenn die Vibrationsmittel am Fahrradrahmen angreifen, können beispielsweise auch der Sattel, eine Federung und/oder eine Gabel in Vibration versetzt werden. Im Falle eines Elektrofahrrads mit Nabenmotor könnte ein Vibrationsalarm ebenfalls in Form einer speziellen Ansteuerung des Antriebsmotors realisiert werden, die der Fahrer als charakteristisches Ruckeln des gesamten Fahrrads wahrnimmt.

### Kurze Beschreibung der Zeichnungen

Wie bereits voranstehend erörtert, gibt es verschiedene Möglichkeiten, die vorliegende Erfindung in vorteilhafter Weise auszugestalten und weiterzubilden. Dazu wird einerseits auf die dem unabhängigen Patentanspruch 1 nachgeordneten Patentansprüche verwiesen und andererseits auf die nachfolgende Beschreibung mehrerer Ausführungsbeispiele der Erfindung anhand der Figuren.
- **Fig. 1**: zeigt das Blockschaltbild einer Vorrichtung zum Signalisieren von Zustandsinformationen an den Fahrer eines Fahrrads,
- **Fig. 2**: zeigt mehrere Anordnungsmöglichkeiten für die Vibrationsmittel einer Vorrichtung in schematischer Darstellung und
- **Fig. 3**: zeigt ein Flussdiagramm zur Erläuterung der Funktionsweise einer Vorrichtung.

### Ausführungsformen der Erfindung

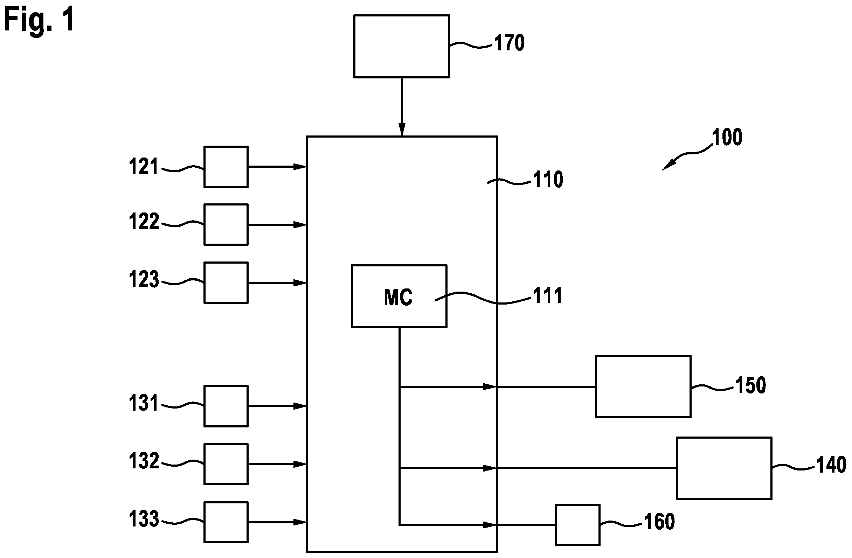

Das Blockschaltbild der **Fig. 1** veranschaulicht das Zusammenwirken der einzelnen Komponenten einer Vorrichtung 100 zum Signalisieren von Zustandsinformationen an den Fahrer eines Fahrrads.

Die Vorrichtung 100 umfasst eine Reihe von Sensoren 121, 122, ..., die Bewegungsparameter des Fahrrads erfassen, wie z.B. die aktuelle Geschwindigkeit, die zurückgelegte Wegstrecke, etc.. Des Weiteren umfasst die Vorrichtung 100 Sensoren 131, 132, ..., die Informationen über den Betriebszustand einzelner Fahrradkomponenten erfassen, wie z.B. Informationen über den Zustand der Beleuchtungsmittel und der Bremsen. Es handelt sich bei dem Fahrrad um ein Elektrofahrrad, somit kann die Vorrichtung 100 auch einen Sensor zum Überwachen des Ladezustands der Batterie umfassen und Sensoren, mit denen der Motorbetrieb überwacht und der jeweilige Assistenzlevel erfasst wird.

Alle Sensorinformationen werden einer Steuereinheit 110 zugeleitet, die z.B. mit einem µC 111 zur Verarbeitung und Auswertung der Sensorinformationen ausgestattet ist. Dadurch kann das Auftreten vorab definierter Zustände überwacht werden, wie z.B. ein persönlicher Geschwindigkeitsrekord, eine überhöhte Geschwindigkeit, das Vorliegen eines sicherheitsrelevanten Mangels, eine Veränderung des Assistenzlevels des Elektroantriebs oder auch die Notwendigkeit von Wartungsmaßnahmen.

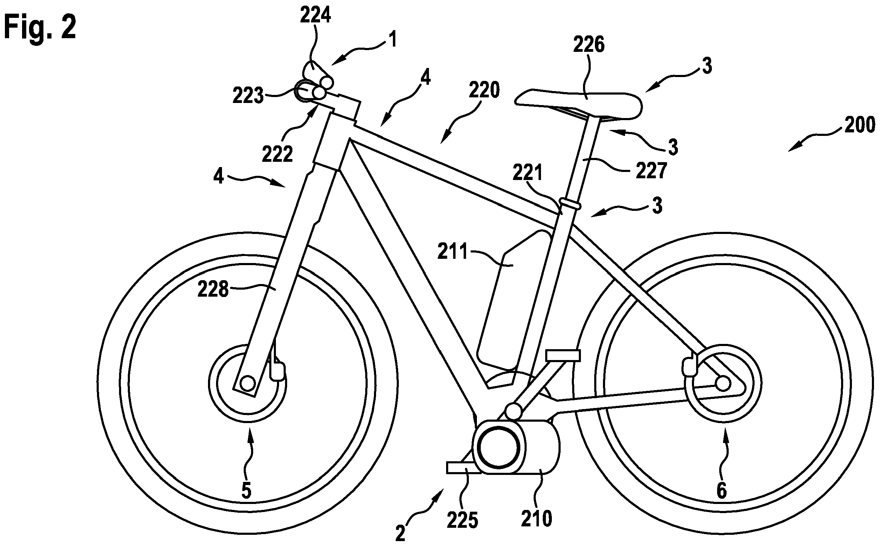

Lassen die Sensorinformationen auf einen dieser vordefinierten Zustände schließen, so löst die Steuereinheit 110 einen Vibrationsalarm aus, d.h. die Steuereinheit 110 steuert Vibrationsmittel 140 an, die in Verbindung mit Fig. 2 näher erläutert werden. Im vorliegenden Ausführungsbeispiel werden die aufbereiteten Sensorinformationen außerdem als detaillierte Zusatzinformationen für den Fahrer auf einem Display 150 dargestellt. Gefahrensituationen werden zusätzlich zum Vibrationsalarm auch noch akustisch signalisiert. Die dazu erforderlichen akustischen Signalmittel 160 werden ebenfalls von der Steuereinheit 110 angesteuert. Neben den Schnittstellen für die Sensoren 121, 122, ... und 131, 132, ... verfügt die Steuereinheit 110 im hier dargestellten Ausführungsbeispiel auch über eine Schnittstelle für eine externe Informationsquelle 170, z. B. Smartphone, so dass auch eintreffende Anrufe und Text-Nachrichten durch einen Vibrationsalarm und/oder akustisch signalisiert werden können. Das Smartphone steht exemplarisch für Komponenten, die nicht im direkten funktionalen Zusammenhang mit dem Elektrofahrrad stehen. Alarmfunktionen können auch durch andere externe Signalgeber ausgelöst werden. So könnten z.B. über Funk Warnsignale übermittelt werden, oder in Verbindung mit einem Navigationsgerät Navigationshinweise übermittelt werden. In einer besonders bevorzugten Form, können z.B. der rechte und der linke Lenkergriff angesteuert werden. Durch Vibration des rechten/linken Griffs kann der Fahrer zum Abbiegen nach rechts bzw. links aufgefordert werden. Durch Anpassen der Vibrationsamplitude oder Frequenz kann zusätzlich angezeigt werden, wie weit das Fahrzeug noch von der Abbiegestelle entfernt ist. Eine analoge Funktionsweise ist auch für das rechte/linke Pedal denkbar.

In **Fig. 2** ist ein erfindungsgemäßes Elektrofahrrad 200 mit Mittelmotorantrieb dargestellt. Der Antriebsmotor 210 ist hier also im Bereich des Tretlagers angeordnet. Die Batterie 211 ist am Sattelrohr 221 des Rahmens 220 oberhalb des Antriebsmotors 210 montiert und dient nicht nur als Stromversorgung für den Antriebsmotor 210 sondern auch für die Vibrationsmittel einer Vorrichtung zum Signalisieren von Zustandsinformationen an den Fahrer. Diese Vibrationsmittel können - je nach Anordnung - auf unterschiedliche Komponenten des Fahrrads einwirken. Die Vibrationsmittel können beispielsweise in Form eines Minimotors mit Unwucht realisiert werden, sind in Fig. 2 aber nicht im Einzelnen dargestellt. Jedoch sind hier mögliche Montage- und Angriffspositionen für Vibrationsmittel durch die Pfeile 1 bis 6 markiert.

In einer ersten Ausführungsvariante - Pfeil 1 - sind die Vibrationsmittel im Bereich des Fahrradlenkers 222 angeordnet, so dass ein Vibrationsalarm wahlweise an einer oder auch an beiden Händen erspürt wird. Dazu kann ein Vibrationsgeber beispielsweise in den am Lenker 222 montierten Fahrradcomputer 224 integriert werden. Der Vibrationsgeber kann aber auch in den Lenker 222 oder die Lenkergriffe 223 integriert sein.

In einer zweiten Ausführungsvariante - Pfeil 2 - dient der Antriebsmotor 210 als Vibrationsmittel. Dazu wird der Antriebsmotor 210 im Falle eines Vibrationsalarms so angesteuert, dass er eine Vibration verursacht, die über die Tretachse und die Kurbeln auf die Pedale 225 übertragen wird. Folglich erspürt der Fahrer einen Vibrationsalarm hier über die Füße.

In einer dritten Ausführungsvariante - Pfeile 3- wird der Sattel 226 in Vibration versetzt. Der Vibrationsgeber kann dazu direkt in den Sattel 226 integriert sein oder auch an der Sattelstütze 227 oder am Sattelrohr 221 angeordnet sein.

In einer vierten Ausführungsvariante - Pfeile 4 - wird ein Rahmenteil, bevorzugt ein gefederter Rahmenteil, wie die Vorderradgabel 228 oder die Rahmenfederung, in Vibration versetzt. Dazu kann der Vibrationsgeber an einer beliebigen Stelle des Rahmens 220 und vorzugsweise an einem gefederten Rahmenteil angeordnet werden. Bei dieser Variante erspürt der Fahrer einen Vibrationsalarm über alle Körperteile, die mit dem Fahrrad in Berührung stehen.

Die Pfeile 5 und 6 beziehen sich auf Ausführungsvarianten für Elektrofahrräder mit Nabenmotor, bei denen - wie in der voranstehend beschriebenen zweiten Ausführungsvariante - der Antriebsmotor als Vibrationsmittel dient. Je nach Anordnung des Nabenmotors am Vorder- oder Hinterrad wird hier durch entsprechende Ansteuerung des Motors das Vorder- oder Hinterrad und damit der gesamte Rahmen 220 in Vibration versetzt.

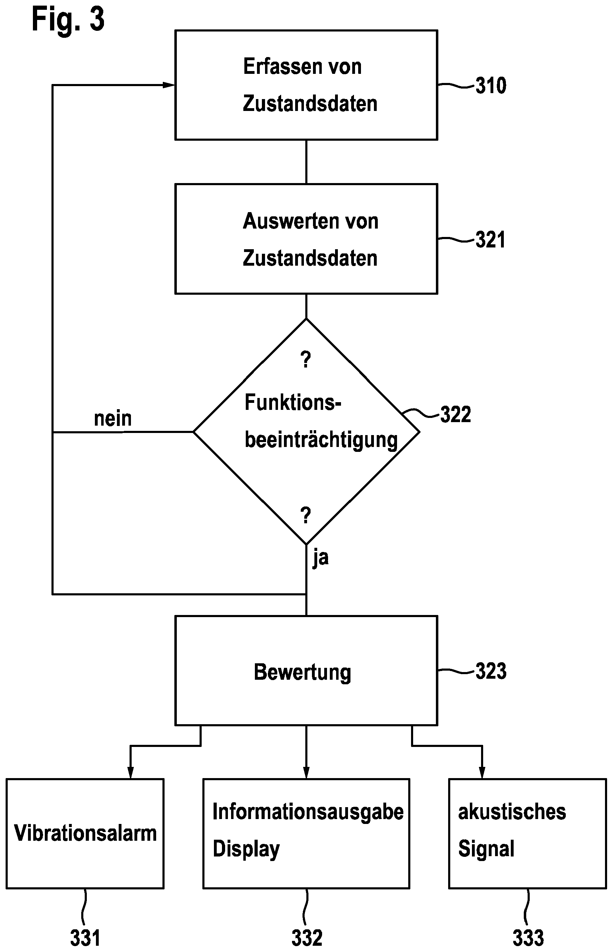

**Fig. 3** veranschaulicht die Funktionsweise einer Vorrichtung, die zum Signalisieren von Beschädigungen und Funktionsmängeln einzelner Komponenten eines Elektrofahrrads konzipiert ist. Dazu umfasst die Vorrichtung eine Sensorik, mit der in einem ersten Verfahrensschritt 310 entsprechende Zustandsdaten erfasst und an die Steuereinheit der Vorrichtung übermittelt werden. In einem zweiten Verfahrensschritt 321 werden diese Zustandsdaten ausgewertet, um im Schritt 322 zu entscheiden, ob Funktionseinschränkungen einzelner Komponenten aufgetreten sind. In einem weiteren Auswerteschritt 323 wird ein so detektierter Schaden dann zunächst bewertet, bevor im Verfahrensschritt 331 ein Vibrationsalarm ausgelöst wird. Dabei werden die Vibrationsmittel der Vorrichtung je nach Art und Schwere des Schadens angesteuert, um die Funktionsbeeinträchtigung entsprechend zu signalisieren. Parallel dazu werden im Verfahrensschritt 332 Zusatzinformationen über die Funktionsbeeinträchtigung auf einem Display der Vorrichtung ausgegeben. Bei schweren Funktionsbeeinträchtigungen wird außerdem im Verfahrensschritt 333 ein akustisches Warnsignal ausgegeben.

Diese erfindungsgemäße Signalisierung durch Vibrationen des Sattels, der Pedale oder der Lenkergriffe liefert dem Fahrer ein unmittelbares Feedback über den Zustand seines Elektrofahrrads Durch Variation des Vibrationssignals kann außerdem die Schwere des Schadens angedeutet werden.

In der Erfindung dient der Motor des Mittelmotorantriebs als Vibrationsgeber, da dieser unmittelbar an die Pedale gekoppelt ist und sich einfach gezielt ansteuern lässt. Dadurch kann eine mehr oder weniger unrunde Pedalbewegung erzeugt werden, die vom Fahrer ohne jedwede Zeitverzögerung wahrgenommen wird. Um einen Gewöhnungseffekt zu vermeiden, sollte es sich bei dem Vibrationssignal um ein deutliches aber diskretes Signal handeln, das den Fahrer lediglich auf den Mängelzustand aufmerksam macht. Detailinformationen zu Art und Schwere des Mangels können dem Fahrer dann beispielsweise noch über das Display seines Fahrradcomputers zur Verfügung gestellt werden. Auf diese Weise können dem Fahrer beispielsweise Informationen signalisiert werden über den Ausfall von Sensoren, einen platten Reifen bzw. einen zu niedrigen oder zu hohen Reifendruck, einen Schaden am Motorantrieb oder auch das Überschreiten eines Wartungsintervallzeitraums.

## Patentansprüche

1. Elektrofahrrad (200) mit einer Vorrichtung (100) zum Signalisieren von Informationen an den Fahrer des Elektrofahrrades, mindestens umfassend
• Mittel (121, 122, ..., 131, 132, ...) zum Erfassen von Zustandsinformationen,
• eine Steuereinheit (110) mit mindestens einer Schnittstelle für die Zustandsinformationen, mit Mitteln (111) zum Auswerten der Zustandsinformationen und mit Mitteln (111) zum Auslösen eines Vibrationsalarms, und
• von der Steuereinheit (110) ansteuerbare Vibrationsmittel (140), durch die sich mindestens eine Fahrradkomponente gezielt in Vibration versetzen lässt
**dadurch gekennzeichnet, dass**
der Antriebsmotor des Elektrofahrrads als Vibrationsmittel fungiert.

2. Elektrofahrrad (200) mit einer Vorrichtung (100) nach Anspruch 1, mit mindestens einem Sensor (121, 122, ...) zum Erfassen von Zustandsinformationen in Form von Bewegungsparametern des Fahrrades, insbesondere zum Erfassen der aktuellen Geschwindigkeit und Beschleunigung.

3. Elektrofahrrad (200) mit einer Vorrichtung (100) nach einem der Ansprüche 1 oder 2, mit mindestens einem Sensor (131, 132, ...) zum Überwachen des Betriebszustands mindestens einer Fahrradkomponente, insbesondere zum Überwachen der Motorfunktion des als Antriebsmotors verwendeten Elektromotors, zum Überwachen des Ladezustandes der Batterie, zum Überwachen Funktionsfähigkeit der Beleuchtungsmittel, zum Überwachen der Abnutzung der Bremsen und der Kette und zum Überwachen des Reifendrucks.

4. Elektrofahrrad (200) mit einer Vorrichtung (100) nach einem der Ansprüche 1 bis 3, bei der die Steuereinheit (110) mit einer Schnittstelle für eine externe Informationsquelle (170), wie ein Mobiltelefon und/oder ein Navigationsgerät, ausgestattet ist und im Fall von eingehenden Informationen, wie Telefonanrufen und/oder Nachrichten, einen Vibrationsalarm auslöst.

5. Elektrofahrrad (200) mit einer Vorrichtung (100) nach einem der Ansprüche 1 bis 4, bei der die Steuereinheit (110) mit einer Schnittstelle für ein Navigationsgerät ausgestattet ist, so dass dem Fahrer die Fahrtrichtung mittels Vibrationsalarm signalisiert wird.

6. Elektrofahrrad (200) mit einer Vorrichtung nach einem der Ansprüche 1 bis 5, **dadurch gekennzeichnet, dass** Vibrationsmittel im Bereich des Fahrradlenkers angeordnet sind, so dass sie zumindest einen Griffbereich des Fahrradlenkers in Vibration versetzen.

7. Elektrofahrrad (200) mit einer Vorrichtung nach einem der Ansprüche 1 bis 6, **dadurch gekennzeichnet, dass** Vibrationsmittel im Bereich des Tretlagers und/oder eines Pedals angeordnet sind, so dass sie zumindest ein Pedal in Vibration versetzen.

8. Elektrofahrrad (200) mit einer Vorrichtung nach einem der Ansprüche 1 bis 7, **dadurch gekennzeichnet, dass** Vibrationsmittel im Bereich des Sattels und/oder der Sattelstütze und/oder des Sattelrohrs angeordnet sind, so dass sie den Sattel in Vibration versetzen.

9. Elektrofahrrad (200) mit einer Vorrichtung nach einem der Ansprüche 1 bis 8, **dadurch gekennzeichnet, dass** Vibrationsmittel am Rahmen angeordnet sind, so dass sie zumindest ein federnd gelagertes Rahmenteil in Vibration versetzen.

10. Elektrofahrrad (200) mit einer Vorrichtung nach einem der Ansprüche 1 bis 9, **dadurch gekennzeichnet, dass** die Vibrationsmittel regelbar sind, so dass die Stärke der Vibrationen gezielt variiert.

11. Elektrofahrrad (200) mit einer Vorrichtung nach einem der Ansprüche 1 bis 10, **gekennzeichnet durch** mindestens einen akustischen Signalgeber und/oder mindestens ein Display, der bzw. das über die Steuereinheit ansteuerbar ist, so dass in definierten Fällen zusätzlich zu einem Vibrationsalarm auch ein akustisches Signal erzeugt wird und/oder Informationen auf dem Display dargestellt werden.

12. Elektrofahrrad (200) mit einer Vorrichtung nach einem der Ansprüche 1 bis 11, **gekennzeichnet durch** die Funktion, dass Vibrationsmittel und/oder akustische Signale so angesteuert werden, dass sie zur Bestätigung einer Aktion, z. B. Drücken eines Knopfes am Remote, dienen.

13. Elektrofahrrad (200) mit einer Vorrichtung nach einem der Ansprüche 1 bis 12, **gekennzeichnet durch** die Funktion, dass bei einer kritischen Funktionsbeeinträchtigung Vibrationsmittel und/oder akustische Signale angesteuert werden und zusätzliche Informationen am Display angezeigt werden.

## Claims

1. Electric bicycle (200) having a device (100) for signalling information to the driver of the electric bicycle, at least comprising
• means (121, 122, ..., 131, 132, ...) for acquiring status information,
• a control unit (110) having at least one interface for the status information, having means (111) for evaluating the status information, and having means (111) for triggering a vibration alarm, and
• vibration means (140) which can be actuated by the control unit (110) and by which at least one vehicle component can be selectively made to vibrate,
**characterized in that**
the drive motor of the electric vehicle functions as a vibration means.

2. Electric bicycle (200) having a device (100) according to Claim 1, having at least one sensor (121, 122, ...) for acquiring status information in the form of movement parameters of the bicycle, in particular for acquiring the current speed and acceleration.

3. Electric bicycle (200) having a device (100) according to one of Claims 1 and 2, having at least one sensor (131, 132, ...) for monitoring the operating state of at least one bicycle component, in particular for monitoring the motor function of the electric motor used as the drive motor, for monitoring the state of charge of the battery, for monitoring the functional capability of the lighting means, for monitoring the wear of the brakes and of the chain and for monitoring the tyre pressure.

4. Electric bicycle (200) having a device (100) according to one of Claims 1 to 3, in which the control unit (110) is equipped with an interface for an external information source (170), such as a mobile telephone and/or a navigation device and triggers a vibration alarm in the event of incoming information such as telephone calls and/or messages.

5. Electric bicycle (200) having a device (100) according to one of Claims 1 to 4, in which the control unit (110) is equipped with an interface for a navigation device, with the result that the direction of travel is signalled to the driver by means of a vibration alarm.

6. Electric bicycle (200) having a device according to one of Claims 1 to 5, **characterized in that** the vibration means are arranged in the region of the bicycle handlebars, with the result that said vibration means cause at least a grip region of the bicycle handlebars to vibrate.

7. Electric bicycle (200) having a device according to one of Claims 1 to 6, **characterized in that** vibration means are arranged in the region of the bottom bracket bearing and/or of a pedal, with the result that said vibration means cause at least one pedal to vibrate.

8. Electric bicycle (200) having a device according to one of Claims 1 to 7, **characterized in that** vibration means are arranged in the region of the saddle and/or of the saddle support and/or of the saddle pipe, with the result that they cause the saddle to vibrate.

9. Electric bicycle (200) having a device according to one of Claims 1 to 8, **characterized in that** vibration means are arranged on the frame, with the result that they cause at least one spring-mounted frame part to vibrate.

10. Electric bicycle (200) having a device according to one of Claims 1 to 9, **characterized in that** the vibration means can be regulated, with the result that the strength of the vibrations varies in a targeted fashion.

11. Electric bicycle (200) having a device according to one of Claims 1 to 10, **characterized by** at least one acoustic signal transmitter and/or at least one display which can be actuated by means of the control unit, with the result that in defined cases, in addition to a vibration alarm an acoustic signal is also generated and/or information is displayed on the display.

12. Electric bicycle (200) having a device according to one of Claims 1 to 11, **characterized by** the function that vibration means and/or acoustic signals are actuated in such a way that they serve to confirm an action, e.g. pressing of a knob on the remote.

13. Electric bicycle (200) having a device according to one of Claims 1 to 12, **characterized by** the function that in the case of a critical functional impairment, vibration means and/or acoustic signals are actuated and additional information is displayed on the display.

## Revendications

1. Vélo à assistance électrique (200) comportant un dispositif (100) de signalisation d'informations au conducteur du vélo à assistance électrique, comprenant au moins
• des moyens (121, 122, ...., 131, 132, ....) d'acquisition d'informations d'état,
• une unité de commande (110) comportant au moins une interface destinée aux informations d'état, munie de moyens (111) d'évaluation des informations d'état et de moyens (111) de déclenchement d'une alarme vibrante et
• des moyens vibrants (140) pouvant être commandés par l'unité de commande (110) et au moyen desquels au moins un composant de vélo peut être mis en vibration, **caractérisé en ce que** le moteur d'entraînement du vélo à assistance électrique fonctionne en tant que moyen vibrant.

2. Vélo à assistance électrique (200) comportant un dispositif (100) selon la revendication 1, muni d'au moins un capteur (121, 122, ....) de détection d'informations d'état sous la forme de paramètres de déplacement du vélo, notamment pour détecter la vitesse et l'accélération actuelles.

3. Vélo à assistance électrique (200) comportant un dispositif (100) selon l'une des revendications 1 ou 2 muni d'au moins un capteur (131, 132, ....) de surveillance de l'état de fonctionnement d'au moins un composant du vélo, notamment pour surveiller la fonction du moteur électrique, utilisé en tant que moteur de propulsion, pour surveiller l'état de charge de la batterie, pour surveiller le bon fonctionnement du système d'éclairage, pour surveiller l'usure des freins et de la chaîne et pour surveiller la pression des pneumatiques.

4. Vélo à assistance électrique (200) comportant un dispositif (100) selon l'une des revendications 1 à 3, dans lequel l'unité de commande (110) est munie d'une interface destinée à une source d'informations externe (170), telle qu'un téléphone mobile et/ou un dispositif de navigation, et déclenche une alarme vibrante en cas d'informations entrantes, telles que des appels téléphoniques et/ou des messages.

5. Vélo à assistance électrique (200) comprenant un dispositif (100) selon l'une des revendications 1 à 4, dans lequel l'unité de commande (110) est munie d'une interface destinée à un dispositif de navigation qui permet de signaler au conducteur la direction de déplacement au moyen d'une alarme vibrante.

6. Vélo à assistance électrique (200) comportant un dispositif selon l'une des revendications 1 à 5, **caractérisé en ce que** des moyens vibrants sont disposés dans la zone du guidon du vélo de manière à mettre en vibration au moins une zone de prise du guidon du vélo.

7. Vélo à assistance électrique (200) comportant un dispositif selon l'une des revendications 1 à 6, **caractérisé en ce que** des moyens vibrants sont disposés dans la zone du pédalier et/ou d'une pédale de manière à mettre en vibration au moins une pédale.

8. Vélo à assistance électrique (200) comportant un dispositif selon l'une des revendications 1 à 7, **caractérisé en ce que** des moyens vibrants sont disposés dans la zone de la selle et/ou de la tige de selle et/ou du tube de selle afin de mettre la selle en vibration.

9. Vélo à assistance électrique (200) comportant un dispositif selon l'une des revendications 1 à 8, **caractérisé en ce que** des moyens vibrants sont disposés sur le cadre de manière à mettre en vibration au moins une partie du cadre qui est supportée de manière élastique.

10. Vélo à assistance électrique (200) comportant un dispositif selon l'une des revendications 1 à 9, **caractérisé en ce que** les moyens vibrants peuvent être commandés de telle manière que l'intensité des vibrations varie de façon ciblée.

11. Vélo à assistance électrique (200) comportant un dispositif selon l'une des revendications 1 à 10, **caractérisé par** au moins un émetteur de signaux acoustiques et/ou au moins un afficheur pouvant être commandé par une unité de commande, de telle manière que, dans des cas définis, en plus d'une alarme vibrante, un signal sonore soit également généré et/ou des informations soient également affichées sur l'écran.

12. Vélo à assistance électrique (200) comportant un dispositif selon l'une des revendications 1 à 11, **caractérisé en ce que** des moyens vibrants et/ou des signaux sonores sont commandés de telle manière qu'ils servent à confirmer une action, par exemple, en appuyant sur un bouton de la télécommande.

13. Vélo à assistance électrique (200) comportant un dispositif selon l'une des revendications 1 à 12, **caractérisé en ce qu'**en cas de défaillance fonctionnelle critique, des moyens vibrants et/ou des signaux sonores sont activés et des informations supplémentaires sont affichées sur l'écran.
